(19) Europäisches Patentamt
European Patent Office
Office européen des brevets

(11) EP 2 101 233 A2

(12) EUROPEAN PATENT APPLICATION

(43) Date of publication:
16.09.2009 Bulletin 2009/38

(51) Int Cl.:
G05B 19/19 (2006.01)    B21D 24/02 (2006.01)

(21) Application number: 08171695.3

(22) Date of filing: 15.12.2008

(84) Designated Contracting States:
AT BE BG CH CY CZ DE DK EE ES FI FR GB GR
HR HU IE IS IT LI LT LU LV MC MT NL NO PL PT
RO SE SI SK TR
Designated Extension States:
AL BA MK RS

(30) Priority: 11.03.2008  JP 2008061646

(71) Applicant: Fanuc Ltd
Yamanashi 401-0597 (JP)

(72) Inventors:
• Hishikawa, Tetsuo
c/o Fanuc Ltd
Minamitsuru-gun Yamanashi 401-0597 (JP)
• Tsujikawa, Keisuke
c/o Fanuc Ltd
Minamitsuru-gun Yamanashi 401-0597 (JP)

(74) Representative: Ward, James Norman
Haseltine Lake LLP
Lincoln House, 5th Floor
300 High Holborn
London WC1V 7JH (GB)

(54) **Numerical controller having function to switch between pressure control and position control**

(57)    The numerical controller has function to switch between pressure control and position control, and comprises a numerical control unit and a servo control unit. While the servo control unit is controlling pressure, a servo position deviation amount corresponding to current actual speed of a control axis is set in the servo control unit. After the servo control unit switches to position control from pressure control, a number of pulses required for deceleration and stopping is output to an acceleration/deceleration processing unit of the numerical control unit according to an acceleration/deceleration time constant which is preset. The acceleration/deceleration processing unit outputs a moving amount for each distribution period to the servo control unit.

FIG. 3

## Description

BACKGROUND OF THE INVENTION

1. Field of the Invention

The present invention relates to a numerical controller that can execute pressure control and position control by switching.

2. Description of the Related Art

Die cushion control is performed in a press machine when sheet metal is inserted into a die by a press shaft, in order to prevent pressure from being suddenly applied to the sheet metal and to relax the change of pressure applied to the sheet metal. A die cushion device for performing this die cushion control controls pressure using hydraulics or pneumatics. After a top die, installed on the press shaft of the press machine, descends and collides with the sheet metal (workpiece), the die cushion device performs pressure control. In the case of die cushion control using hydraulics or pneumatics, a delay is generated from applying the control signal to the response, so it is generally difficult to control preventing a surge pressure due to the impact at the start of the press from being applied to the sheet metal.

A numerical controller which can perform control pressure control and position control of a control target (movable portion driven by a motor) by switching is well known. In a press machine which holds a sheet metal (workpiece) between a bottom die and a top die which is secured on a press shaft and which pressures the sheet metal for processing, the use of a die cushion device for pressure control to hold the sheet metal (workpiece) between the top die and bottom die is disclosed in Japanese Patent Application Laid-Open No. 10-202327.

The die cushion device disclosed in the aforementioned patent document is controlled by a numerical controller, where the position control of the cushion stroke and pressure control by current torque control are switched. A touch point in which this die cushion device touches a cushion pad is determined by detecting a change in current value of a servo motor which drives the die cushion pad. Therefore in this die cushion device, switching from the position control to the pressure control delays, and the shock when touching the cushion pad cannot be reduced.

In a die cushion control device of a press machine, outputting an instruction to cancel a difference between an instructed position stored in a position loop control unit which constitutes a servo control unit and a detected position (position deviation) when pressure control is switched to position control, is disclosed in Japanese Patent Application Laid-Open No. 2006-122944.

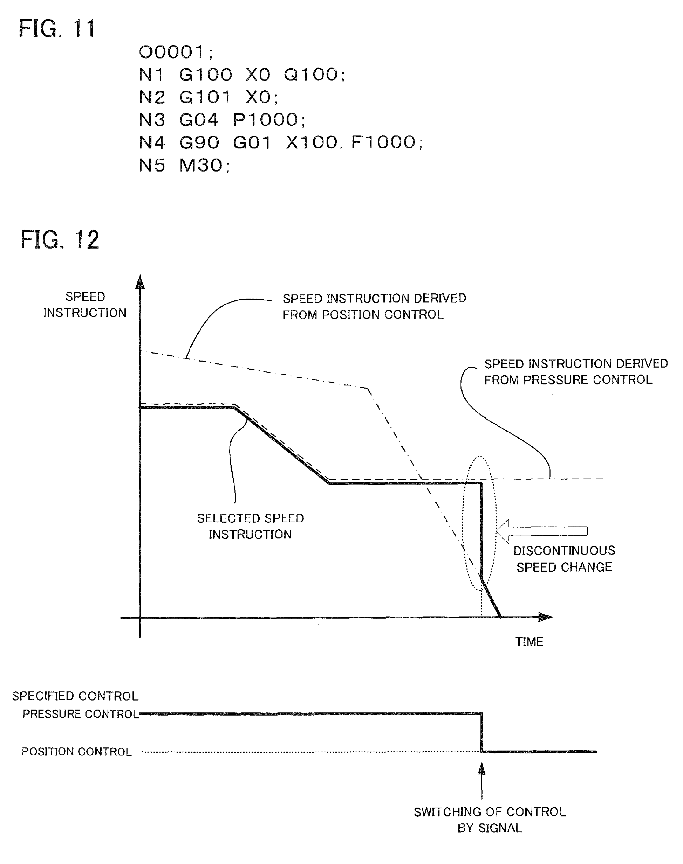

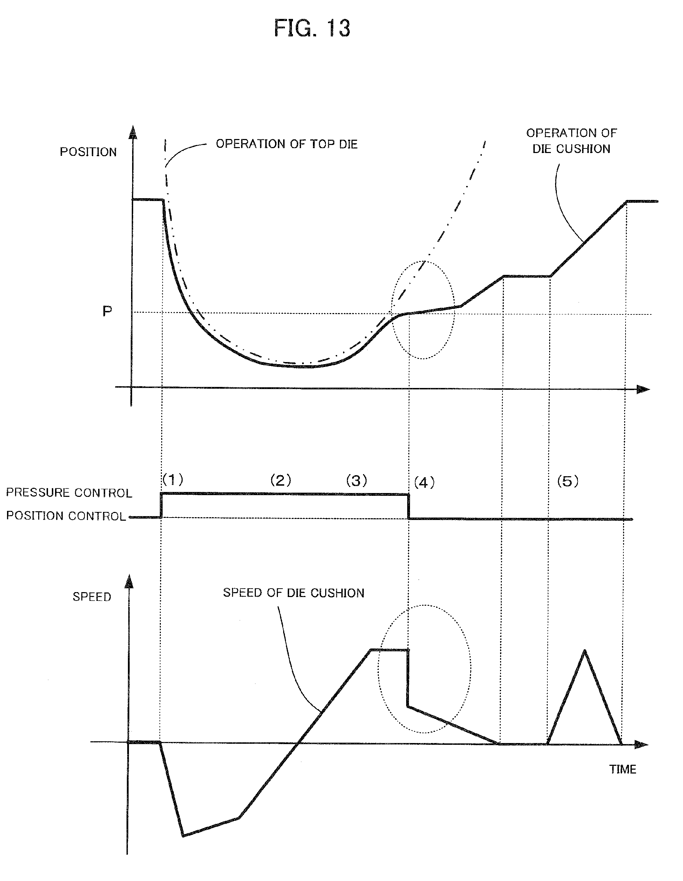

In this die cushion control device disclosed in the aforementioned patent document, pressure control is switched to position control by an instruction of an external signal or the like, and when this switching is executed, an instruction to cancel the position deviation which is accumulated in the servo control unit is output so as to prevent the shock generated by sudden acceleration due to switching. However if pressure control is switched to position control while the shaft is moving, the speed instruction value during operation of the shaft for pressure control and the speed instruction value during operation of the shaft for position control become discontinuous, and as a result a mechanical shock is generated in the die cushion when pressure control is switched to position control as shown in Fig. 12 and Fig. 13.

SUMMARY OF THE INVENTION

With the foregoing in view, it is an object of the present invention to provide a numerical controller having function to switch between pressure control and position control, in which the speed instruction values do not become discontinuous when pressure control is switched to position control, and the generation of a mechanical shock during the switching can be prevented.

A first aspect of a numerical controller having a switching function from pressure control to position control according to the present invention, comprises: a servo control unit which switches between pressure control and position control based on an instruction from the outside, or automatically according to a switching condition, for operation; servo position deviation amount setting means for setting, while the servo control unit is controlling pressure, a servo position deviation amount corresponding to current actual speed of a control axis in the servo control unit; and pulse output means for outputting, after the servo control unit switches to position control from pressure control, a number of pulses required for deceleration and stopping according to an acceleration/deceleration time constant which is preset, to an acceleration/deceleration processing unit. The acceleration/deceleration processing unit outputs a moving amount for each distribution period to the servo control unit.

A second aspect of a numerical controller having a switching function from pressure control to position control according to the present invention, comprises: a servo control unit which automatically switches between pressure control and position control according to a switching condition, for operation; servo position deviation amount setting means for setting, while the servo control unit is controlling pressure, a servo position deviation amount corresponding to current actual speed of a control axis in the servo control unit; and pulse output means for outputting, after the servo control unit switches to position control from pressure control, a number of pulses required for deceleration and stopping according to an acceleration/deceleration time constant which is preset, to an acceleration/deceleration processing unit; interruption means for temporarily interrupting switching from the pressure control to position control using an instruction from the outside; and servo position deviation amount setting means for setting a servo position deviation amount corresponding to an axial speed of the control axis in the servo control unit, during pressure control, when the interruption by the interruption means is executed. The acceleration/deceleration processing unit outputs a moving amount for each distribution period to the servo control unit.

In the numerical controller according to the present invention, which has the above configuration, a mechanical shock, when pressure control is switched to position control, can be prevented.

BRIEF DESCRIPTION OF THE DRAWINGS

The above and other objects and characteristics of the present invention will be clarified by the description of the following examples with reference to the accompanying drawings. In the drawings:

Fig. 1 is a diagram illustrating a numerical controller which performs pressure control;

Fig. 2 is a diagram illustrating controlling a die cushion device in a press machine by a numerical controller;

Fig. 3 is a functional block diagram illustrating an embodiment of the numerical controller according to the present invention;

Fig. 4 is a flow chart illustrating a first processing executed by an NC unit of the numerical controller in Fig. 3;

Fig. 5 is a flow chart illustrating a second processing executed by an NC unit of the numerical controller in Fig. 3;

Fig. 6 is a graph illustrating a speed instruction which the servo control unit outputs when the numerical controller in Fig. 3 did not execute the processing shown in the flow chart in Fig. 5 (in particularly, the speed instruction after pressure control is switched to position control);

Fig. 7 is a graph illustrating a speed instruction which the servo control unit outputs when the numerical controller in Fig. 3 did not execute the processing shown in the flow chart in Fig. 5;

Fig. 8 is a diagram illustrating the numerical controller in Fig. 3 executing the processing shown in the flow chart in Fig. 5, and an acceleration/deceleration processing unit of an NC control unit thereof transferring pulses which gradually decelerates (a number of pulses corresponding to a triangular area given by a speed instruction value from the servo control unit) to the servo control unit (in particular, the speed instruction after pressure control is switched to position control);

Fig. 9 is a diagram illustrating the numerical controller in Fig. 3 executing the processing shown in the flow chart in Fig. 5, and the acceleration/deceleration processing unit of the NC control unit thereof transferring pulses which gradually decelerates to the servo control unit, so that the stopping operation after pressure control is switched to position control can be performed smoothly;

Fig. 10 is a diagram illustrating the transition of the die cushion position and die cushion speed with respect to the elapsed time of the die cushion device when the numerical controller for controlling the die cushion device executes the processing shown in the flow chart in Fig. 5;

Fig. 11 shows an example of a die cushion program which the numerical controller in Fig. 3 executes;

Fig. 12 is a diagram illustrating the relationship of the elapsed time and speed instruction in the die cushion operation control according to a prior art; and

Fig. 13 is a diagram illustrating the time-based transition of the die cushion position and die cushion speed in the die cushion operation control according to the prior art.

DETAILED DESCRIPTION OF THE PREFERRED EMBODIMENTS

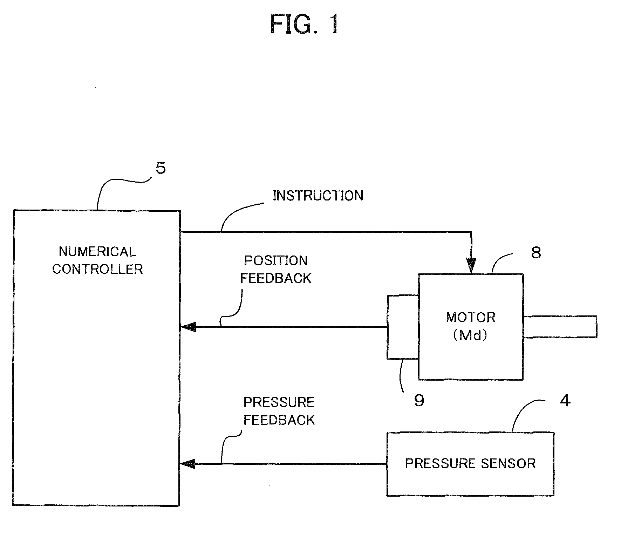

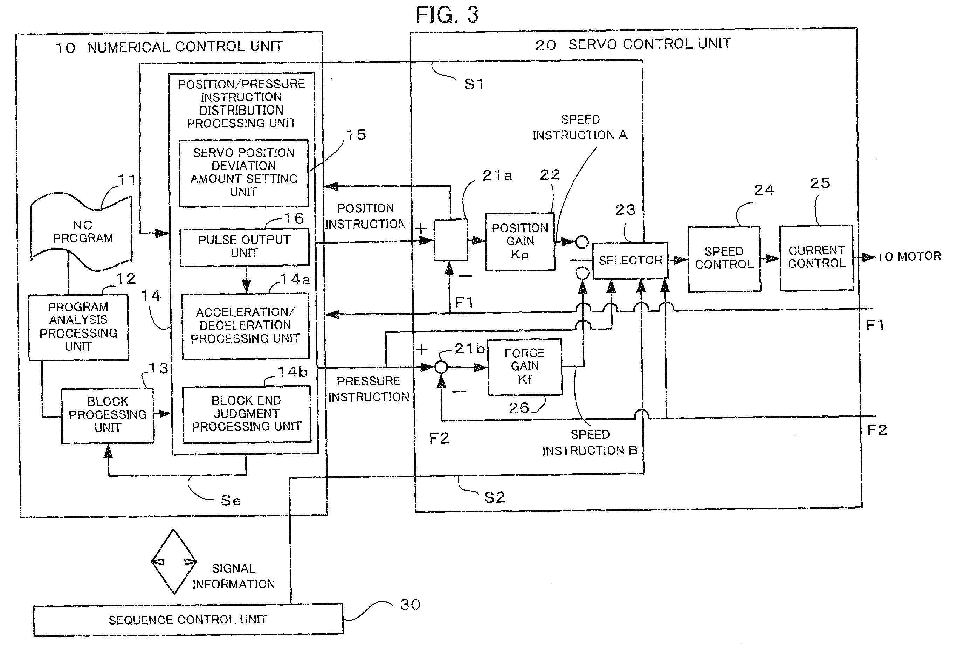

Fig. 1 shows a numerical controller 5 for performing pressure control. This numerical controller 5 acquires a pressure feedback value from a pressure sensor 4 installed in a control target, and a position feedback value from a position detector 9 for detecting a rotation position of a servo motor 8 for die cushion for driving the control target, and controls driving of the servo motor 8 based on these feedback values. As described later with reference to Fig. 3, the numerical controller 5 is comprised of a numerical control (NC) unit 10 and a servo control unit 20.

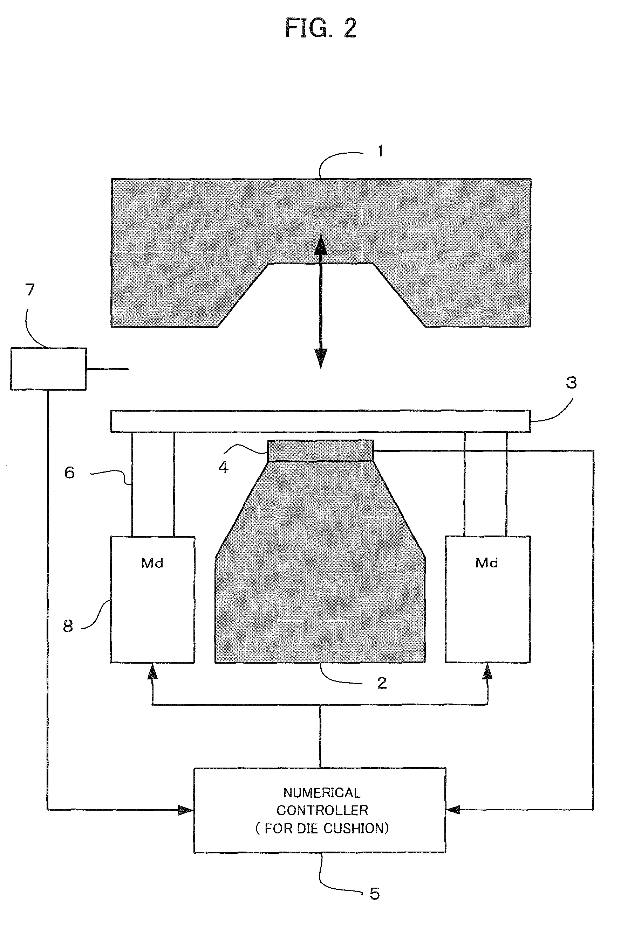

Fig. 2 is a diagram illustrating control of a die cushion device in a press machine according to an embodiment of the numerical controller 5 of the present invention. As Fig. 2 shows, this numerical controller 5 controls driving of the servo motor 8 for die cushion for driving a die cushion element 6 of the die cushion device.

Now an overview of the press processing operation in the press machine shown in Fig. 2 will be described. In a state where a sheet metal (workpiece) 3 is placed on a positioned die cushion, a top die (press shaft) 1 descends.

(1) When the top die 1, which is controlled by the press shaft, contacts the sheet metal (workpiece) 3, the position control is switched to the pressure control.

(2) Pressure control is performed so that the sheet metal (workpiece) 3 is held with a predetermined pressure until the top die 1 reaches the bottom dead center.

(3) Even after the top die 1 ascends from the bottom dead center, the pressure control is continued so as to hold the sheet metal (workpiece) 3.

(4) When the top die 1 passes a predetermined position P, the die cushion element 6 stops holding the sheet metal (workpiece) 3 under pressure control. In other words, pressure control is stopped and switched back to position control. Then the die cushion element 6 stops.

(5) Then the die cushion element 6 moves back to a standby position under position control. The servo control unit 20 (see Fig. 3) in the numerical controller 5 of the die cushion shown in Fig. 2 switches pressure control and position control as follows (the aforementioned switching is hereafter called "switching type 1").

(a) If the current state is position control, the control is switched to pressure control when the pressure feedback value from the pressure sensor 4 exceeds a predetermined pressure determined by a program instruction.

(b) If the current state is pressure control, the control is switched to position control when the pressure control/position control select signal, which is instructed by an input signal, is switched to "position control".

In order to implement operation of the die cushion using the switching type 1, when the pressure control is started in (1), the pressure control/position control select signal is switched to "pressure control", and when the top die 1 passes a position P in (4), the pressure control/position control select signal is switched to "position control". Whether the top die 1 reaches the position P or not can be known by monitoring the position of the top die 1 by the position sensor 7.

When "pressure control" is switched to "position control" in stage (4) of the die cushion operation, if a speed instruction value which is used during pressure control operation and a speed instruction value which is determined by a servo position deviation amount resulting from the position control and a position loop gain are not continuous, mechanical shock is generated in the die cushion element 6 (see Fig. 12 and Fig. 13).

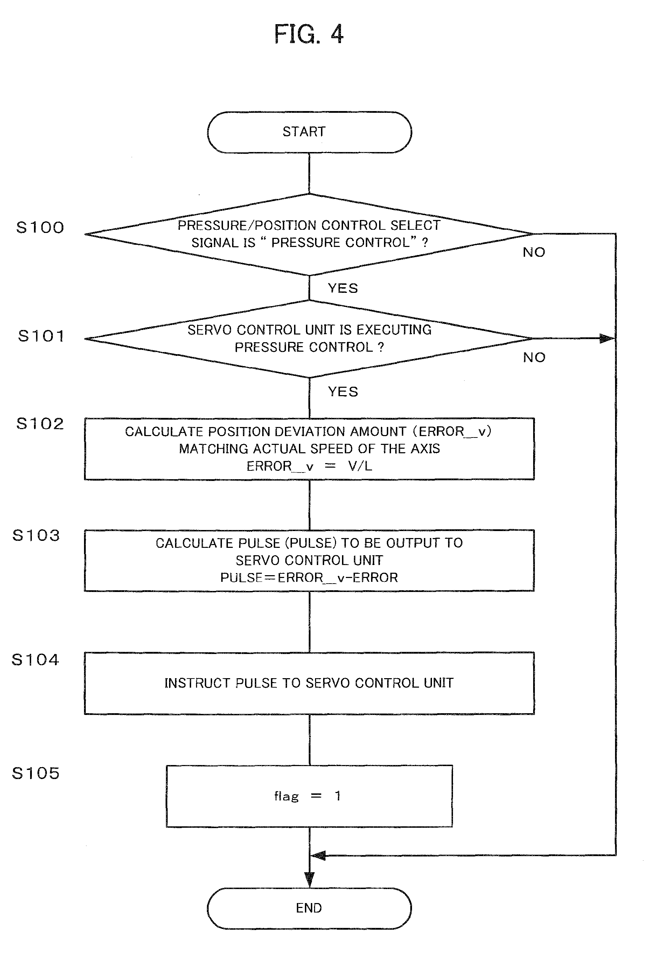

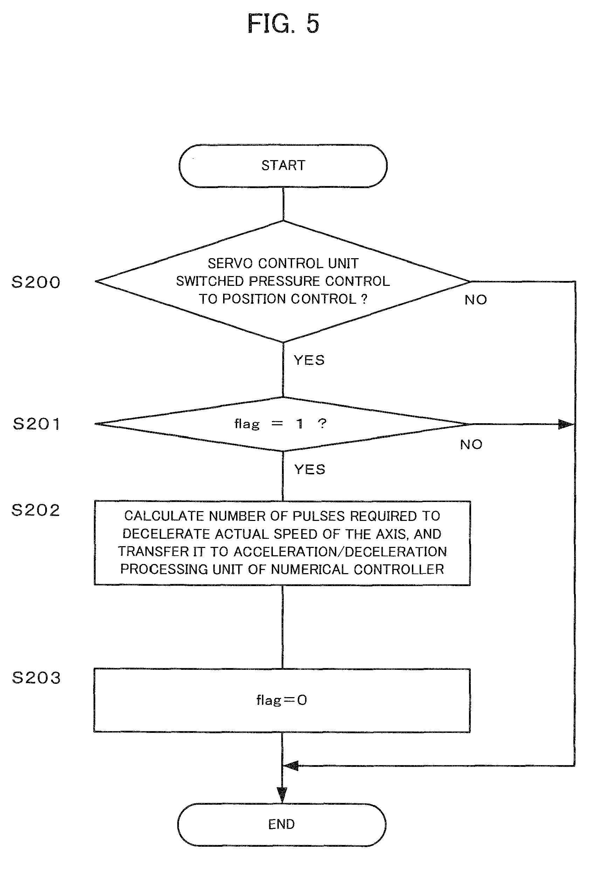

Hence the operation shown in the flow chart in Fig. 4 is executed during "pressure control" in the die cushion operation so that continuity from the speed instruction value calculated in pressure control to the speed instruction value calculated in position control is maintained. Also the operation shown in the flow chart in Fig. 5 is executed when pressure control is switched to position control, so that the operation can be performed without mechanical shock until it decelerates and stops after switched to position control.

Instead of the switching type 1, the servo control unit 20 (see Fig. 3) of the numerical controller 5 of the die cushion shown in Fig. 2 may perform the following switching between pressure control and position control (the aforementioned switching is hereafter called "switching type 2").

(a') The die cushion operation is performed using a smaller speed instruction value out of the speed instruction value calculated by the position control and the speed instruction value calculated by the pressure control.

(b') In (a'), judgment of the servo control unit 20 as to whether or not pressure control is switched to position control is temporarily stopped by a signal which is input from the outside, thereby enabling to maintain pressure control.

Switching from pressure control to position control of the present invention is different between the switching type 1 and the switching type 2 in the following aspects.

(A) In the switching type 1, the servo control unit is immediately set to the position control if the pressure control/position control select signal is switched to position control during pressure control.

(B) In switching type 2, judging the switch to the position control is temporarily stopped by a signal, so even if this stop is cancelled, in some cases, the pressure control may not be switched to position control immediately.

Even if there is such a difference as described above, if "switching to the position control using the pressure control/position control select signal" in (A) is replaced with "cancellation of stopping judging the switch to the position control which is performed using an external signal" in (B), then the switching type 1 and the switching type 2 generate similar results. This is because at the point when "cancellation of stopping judging the switch to the position control" is performed,

(i) if pressure control is immediately switched to position control, the switching type 1 and the switching type 2 substantially have no difference, and

(ii) if pressure control is not immediately switched to position control, (a') of the switching type 2 becomes a condition to switch the pressure control to the position control, so the continuity of the speed instructions is maintained when pressure control is switched to position control.

By executing the operation shown in the flow chart in Fig. 5 at the point when pressure control is switched to position control, operation from the start of position control to deceleration and stop can be performed without mechanical shock.

Now the numerical controller 5 in Fig. 1 will be described in more detail with reference to Fig. 3.

Fig. 3 is a functional block diagram of the numerical controller 5 having a function to switch between the pressure control and the position control according to an embodiment of the present invention.

The numerical controller 5 is comprised of a numerical control (NC) unit 10 and a servo control unit 20. In the NC unit 10, a program analysis processing unit 12 sequentially reads the instruction of each block of an NC program 11, analyzes and converts it to execution data, and stores it in a block processing unit 13.

A position/pressure instruction distribution unit 14 reads execution data for each block from the block processing unit 13, executes a moving amount distribution processing in the position instruction and acceleration/deceleration processing in an acceleration/deceleration processing unit 14a according to the instruction, and outputs the moving amount for each distribution period to the servo control unit 20 as the position instruction. The position/pressure instruction distribution processing unit 14 also outputs a pressure instruction value to a servo motor 8 in each distribution period.

A block end judgment processing unit 14b judges whether all the moving amounts of the position instruction in instructions for one block currently being executed have already been transferred to the servo control unit 20, and if it is judged that all the moving amounts of the position instruction have already been transferred, the block end judgment processing unit 14b sends a block completion notice signal Se, which indicates completion of execution of the instruction in the block currently being executed, to the block processing unit 13. The block processing unit 13 receives the block completion notice signal Se, and transfers the execution data of the instruction in the next block to the position/pressure instruction distribution processing unit 14. Then processing of the next block is executed.

The servo position deviation amount setting unit 15 sets the servo position deviation amount corresponding to the current actual speed of the control axis in the servo control unit 20 while the servo control unit 20 is executing pressure control. The pulse output unit 16 outputs the number of pulses required for deceleration and stopping according to an acceleration/deceleration time constant which is preset, to the acceleration/deceleration processing unit 14a. The servo position deviation amount setting unit 15 and the pulse output unit 16 calculate the servo position deviation amount and the number of pulses required by executing the algorithm shown in the flow charts in Fig. 4 and Fig. 5.

The servo control unit 20 is comprised of an error counter 21a, unit 22 for position gain Kp, selector 23, speed control unit 24, current control unit 25, comparator 21b and force gain unit 26. The error counter 21a constitutes a position loop control unit, and the comparator 21b constitutes a pressure control unit.

The error counter 21a calculates the position deviation based on a position instruction sent from the NC unit 10 and a position feedback F1 sent from a position/speed detector (not illustrated) installed in the servo motor. A speed instruction A derived from the position control is determined by multiplying the position deviation by a position gain Kp.

On the other hand, the comparator 21b determines pressure deviation based on a pressure instruction which is output from the NC unit 10 and a pressure feedback F2 sent from the pressure sensor 4. A speed instruction B derived from the pressure control is determined by multiplying the pressure deviation by a force gain Kf.

The pressure instruction which is output from the NC unit 10, the pressure control/position control select signal S2 which is output from the sequence control unit 30, and the pressure feedback F2 which is output from the pressure sensor 4 are input to the selector 23. Based on these input signals, the selector 23 selects either the speed instruction A or the speed instruction B. The selector 23 also outputs a pressure control/position control select result signal S1 to the position/pressure instruction distribution processing unit 14 of the NC unit 10.

The position feedback F1 sent from the position/speed detector installed in the servo motor is input not only to the error counter 21a but also to the NC unit 10, and is used for calculating the actual speed of the control axis. When the position information of the control axis is input from the position/speed detector, the speed information of the control axis can be obtained by differentiating this position information.

The speed control unit 24 and the current control unit 25 perform control based on the speed feedback and current feedback respectively, in the same way as a conventional servo control, although illustration of this control is omitted here.

Now a first processing, which the NC unit 10 in Fig. 3 executes, will be described with reference to the flow chart in Fig. 4.

It is judged whether or not the pressure control/position control select signal S2 sent from the sequence control unit 30 indicates selection of "pressure control" (step S100). If the selection is pressure control, then it is judged whether the servo control unit 20 is in pressure control or not (step S101). And if the selection is not pressure control, on the other hand, this processing ends.

If it is judged that the servo control unit 20 is in pressure control in step S101, the position deviation amount (ERROR_v), matching the actual speed of the current processing target control axis, is calculated (step S102). This position deviation amount ERROR_v is determined by the following expression.

$$ERROR\_v = V/L$$

Here, V is a current actual speed of the control axis, and L is a position loop gain. If it is judged that the servo control unit 20 is not in pressure control in step S101, on the other hand, this processing ends.

When the position deviation amount (ERROR_v) is calculated in step S102, then the number of pulses (PULSE) to be output to the servo control unit 20 is calculated (step S103). This number of pulses (PULSE) is determined by the following expression.

$$PULSE = ERROR\_v - ERROR$$

Here, ERROR is a position deviation amount currently stored in the error counter 21a of the servo control unit 20.

When the number of pulses (PULSE) is calculated in step S103, the number of pulses (PULSE) is instructed to the servo control unit 20 (step S104). Then "1" is set to a flag (step S105). This flag is used to notify the second processing (see the flow chart in Fig. 5) to be executed by the NC unit 10 of the execution of processing from step S102 to step S104.

After setting the flag in step S105, this first processing ends.

When the first processing shown in the flow chart in Fig. 4 is repeated for each control period, and if the judgment result in step S100 and step S101 both become YES, the servo position deviation amount matching the actual speed of the control axis to be processed in the current cycle is always accumulated in the servo control unit 20 (error counter 21a) in Fig. 3. This means that in this state the speed instruction value calculated based on the servo position deviation amount and loop gain roughly match the actual speed of the control axis when the position control operation is executed. Therefore in this state, the continuity of the speed instruction values is not lost regardless when pressure control is switched to position control.

Now a second processing, which the NC unit 10 in Fig. 3 executes, will be described with reference to the flow chart in Fig. 5.

It is judged whether or not the servo control unit 20 shown in Fig. 3 is switched from pressure control to position control (step S200), and if switched to position control, the processing proceeds to step S201, and if not, the processing ends.

If it is judged that the servo control unit 20 switched from pressure control to position control, then it is judged whether the flag is "1" or not (step S201). If the flag is "1", the processing proceeds to step S202, and if the flag is not "1", this processing ends.

If the flag is set to "1" in step S105 of the processing shown in the flow chart in Fig. 4, it is judged that the flag is "1" in step S201. Then the number of pulses required for decelerating from the actual speed of the control axis is calculated, and this number of pulses calculated is transferred to the acceleration/deceleration processing unit 14a of the NC unit 10 (step S202). And the flag is reset to "0" (step S203), and this processing ends.

The calculation for the number of pulses required for decelerating from the actual speed of the control axis to be processed in the current cycle differs depending on the deceleration mode. For example, if a specified deceleration mode in which a linear deceleration operation is performed from the current speed and the control axis is stopped after a predetermined time has elapsed is specified, the number of pulses required can be calculated by the following expression.

Number of pulses required for deceleration = $0.5 \times f \times t$ Here, f is a current actual speed of the control axis, and t is a time elapsed from the current time until the control axis is stopped.

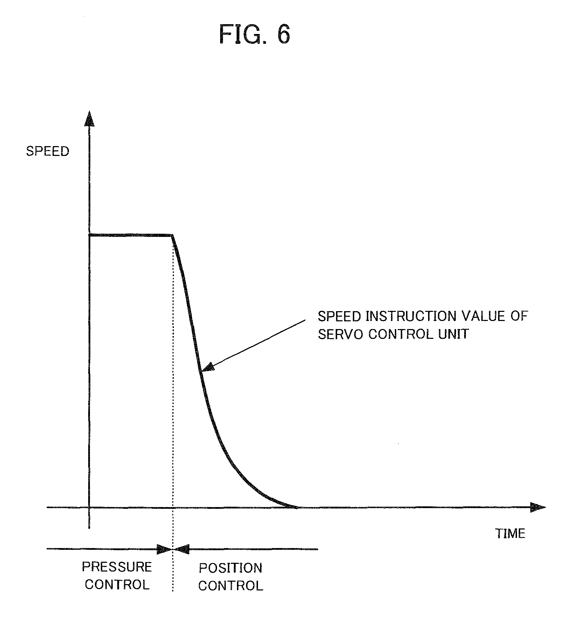

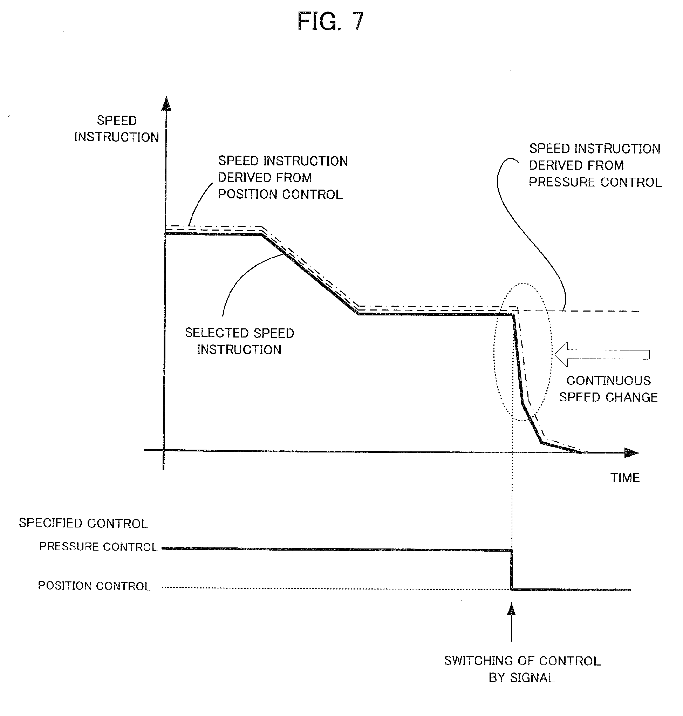

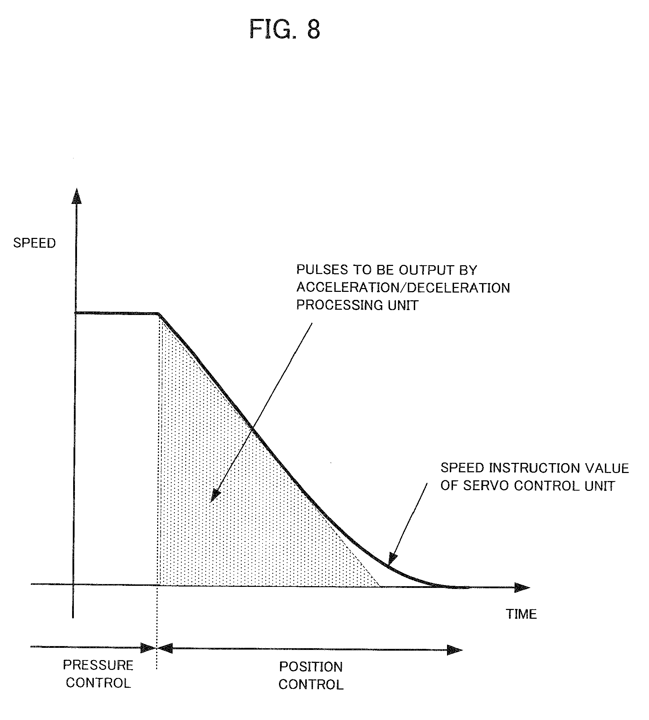

Now the effect of the die cushion operation by the processing shown in the flow chart in Fig. 5 will be described with reference to Fig. 6 to Fig. 10. Of these drawings, Fig. 6 and Fig. 7 show a case where the processing shown in the flow chart in Fig. 5 is not executed, and Fig. 8, Fig. 9 and Fig. 10 show a case where the processing shown in the flow chart in Fig. 5 is executed.

(Case where processing in Fig. 5 is not executed)

Fig. 6 shows that, after pressure control is switched to position control, the stopping operation based on the position loop gain (Kp in Fig. 3) is executed. As Fig. 7 shows, the speed change is continuous, but if the actual speed of the control axis is fast, a stop is executed by a sudden deceleration, as a result, mechanical shock may be generated.

(Case where processing in Fig. 5 is executed)

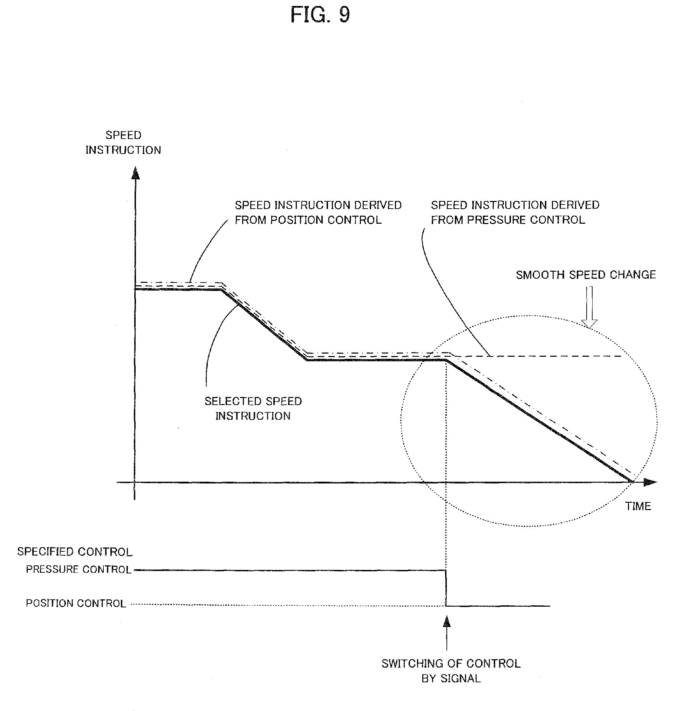

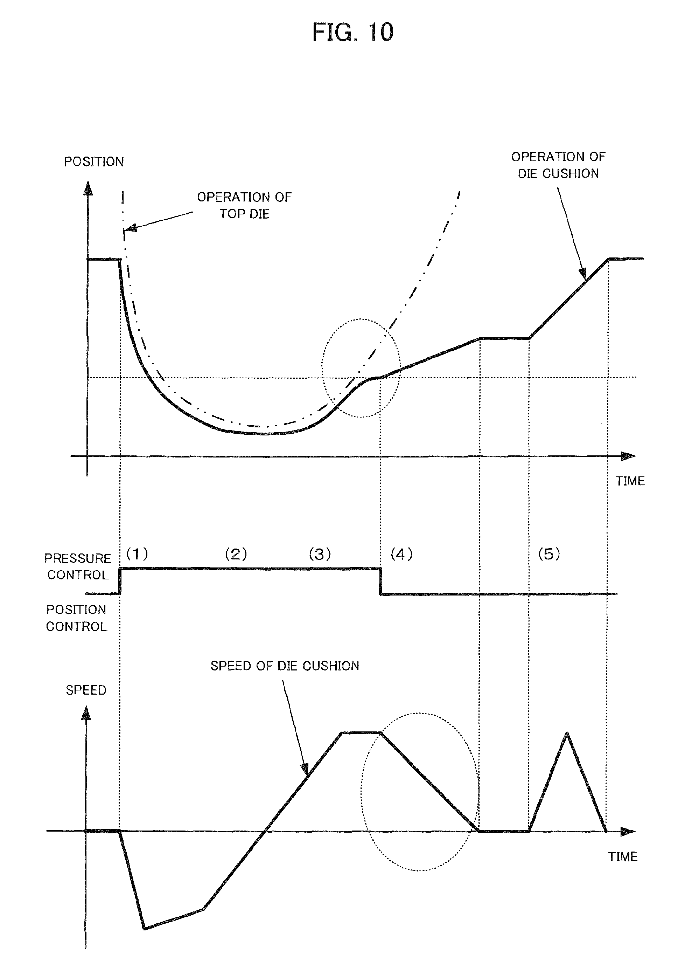

Fig. 8 shows, at the point when pressure control is switched to position control, a number of pulses corresponding to the triangular area shown in Fig. 8 (indicated as "pulses to be output by acceleration/deceleration processing unit" in Fig. 8) are transferred to the acceleration/deceleration processing unit of the NC unit 10. As a result, the acceleration/deceleration processing unit 14a can transfer pulse output, which gradually decelerates over time, to the servo control unit 20. Thereby the smooth deceleration shown in Fig. 9 can be executed, and the stopping operation after pressure control is switched to position control can be performed smoothly, and as a result, the generation of mechanical shock in the die cushion can be prevented. As clearly shown in the comparison of the speed of the die cushion shown in Fig. 10 (case of the present invention which executes the processing shown in Fig. 5) and the speed of the die cushion shown in Fig. 13 (case of prior art which does not execute the processing shown in Fig. 5), a sudden speed change is not generated at the point of change from pressure control to position control, in the case of the numerical controller of the present invention. Here (1) to (5) in Fig. 10 to Fig. 13 correspond to the above mentioned (1) to (5), which were used to describe the die cushion operation in the press machine shown in Fig. 2.

Now the switching operation from pressure control to position control will be described with reference to an example of the program which the numerical controller 5 of the present invention executes.

Fig. 11 is an example of a die cushion program which the numerical controller of the present invention executes.

In the program in Fig. 11, "O0001" is a program number, "N1 to N5" are sequence numbers, "G100" is a pressure instruction, "X0" is an instruction to specify the target axis of the pressure control to the X axis, "Q□□" is a pressure instruction value, and "G101" is an instruction to perform operation of the algorithm shown in Fig. 4 and Fig. 5. "G04" is an instruction to instruct dwelling, and is a mode to delay the execution of the next block by a programmed time or a predetermined time. "P□□□" is an instruction value to instruct a dwelling time. "G90" is an absolute instruction, and is an instruction to provide a coordinate value in a block as an absolute amount. "G01" is an instruction for linear interpolation, and instructs linear movement of the control axis. "X□□" is a coordinate value. "F□□" is a feed speed. And "M30" is an instruction for program end.

The numerical controller 5 executes the program 00001. It is assumed here that the pressure control/position control select signal S2, which is input as a separate signal, is selecting "pressure control". In the example of Fig. 2, this selection can be judged by the presence/absence of the output signal of the position sensor 7.

The NC unit 10 of the numerical controller 5 executes the block N1 and then sends the pressure instruction value to the servo control unit 20. The target axis of the pressure control is specified to the X axis by "X0". The pressure instruction value is "Q100", of which "100" means 100 Mpa (mega pascal).

In the block N2, after pressure control is once selected by the code "G101", the execution is continued until operation returns to position control. In the case of the operation in the die cushion, the pressure rises by the top die 1 descending and colliding with the die cushion during execution of the block N2. When the instruction value of the pressure instruction Q100, instructed in the block N1, is exceeded, the servo control unit 20 is switched from the position control to the pressure control, and the processing shown in Fig. 4 is repeatedly executed until operation returns to the position control.

The top die 1 descends down to the bottom dead center in this state, and the die cushion element 6 also descends based on pressure control while holding the metal sheet (workpiece) 3. When the top die 1 passes the bottom dead center and passes a predetermined position, the pressure control/position control select signal S2, which is input as a signal, selects "position control". If this select signal is transferred to the servo control unit 20, the servo control unit 20 selects position control. As a result, the NC unit 10 executes the processing shown in Fig. 5.

The block N3 with the sequence number N3 is an instruction to wait for 1000 milliseconds after deceleration and stop. When the block N2 ends and the acceleration/deceleration processing unit 14a of the NC unit 10 starts deceleration, the die cushion element 6 holding the sheet metal (workpiece) 3 is separated from the top die 1, and decelerates and stops without generating any mechanical shock. After a lapse of 1000 milliseconds (1 second) from the stop of the die cushion 6, execution of the block N4 is started, and the die cushion element 6 moves to X100, which is the standby position, at speed 1000 mm/min specified by "F". And the program "O0001" ends by the instruction "M30".

## Claims

1. A numerical controller having a switching function from pressure control to position control, comprising:

   a servo control unit which switches between pressure control and position control based on an instruction from the outside, or automatically according to a switching condition, for operation; servo position deviation amount setting means for setting, while said servo control unit is controlling pressure, a servo position deviation amount corresponding to current actual speed of a control axis in said servo control unit; and pulse output means for outputting, after said servo control unit switches to position control from pressure control, a number of pulses required for deceleration and stopping according to an acceleration/deceleration time constant which is preset, to an acceleration/deceleration processing unit,
   wherein said acceleration/deceleration processing unit outputs a moving amount for each distribution period to said servo control unit.

2. A numerical control deice having a switching function from pressure control to position control, comprising:

   a servo control unit which automatically switches between pressure control and position control according to a switching condition, for operation;

servo position deviation amount setting means for setting, while said servo control unit is controlling pressure, a servo position deviation amount corresponding to current actual speed of a control axis in said servo control unit; and pulse output means for outputting, after said servo control unit switches to position control from pressure control, a number of pulses required for deceleration and stopping according to an acceleration/deceleration time constant which is preset, to an acceleration/deceleration processing unit;

interruption means for temporarily interrupting switching from said pressure control to position control using an instruction from the outside; and servo position deviation amount setting means for setting a servo position deviation amount corresponding to an axial speed of the control axis in said servo control unit, during pressure control, when the interruption by said interruption means is executed, wherein said acceleration/deceleration processing unit outputs a moving amount for each distribution period to said servo control unit.

# FIG. 1

# FIG. 2

NUMERICAL
CONTROLLER
( FOR DIE CUSHION)

**FIG. 3**

# FIG. 4

```
                        ┌─────────────┐
                        │   START     │
                        └─────────────┘
                               │
                               ▼
S100              ╱────────────────────────────╲
          ◄──────   PRESSURE/POSITION CONTROL SELECT
                    SIGNAL IS " PRESSURE CONTROL" ?      NO
                  ╲────────────────────────────╱
                               │ YES
                               ▼
S101              ╱────────────────────────────╲
                    SERVO CONTROL UNIT IS EXECUTING  ───────►
                        PRESSURE CONTROL ?           NO
                  ╲────────────────────────────╱
                               │ YES
                               ▼
S102    ┌──────────────────────────────────────────┐
        │  CALCULATE POSITION DEVIATION AMOUNT (ERROR_v) │
        │    MATCHING ACTUAL SPEED OF THE AXIS      │
        │         ERROR_v  =  V/L                   │
        └──────────────────────────────────────────┘
                               │
                               ▼
S103    ┌──────────────────────────────────────────┐
        │   CALCULATE PULSE (PULSE) TO BE OUTPUT TO │
        │          SERVO CONTROL UNIT               │
        │        PULSE=ERROR_v-ERROR                │
        └──────────────────────────────────────────┘
                               │
                               ▼
S104    ┌──────────────────────────────────────────┐
        │   INSTRUCT PULSE TO SERVO CONTROL UNIT    │
        └──────────────────────────────────────────┘
                               │
                               ▼
S105        ┌──────────────────────────────┐
            │         flag  =  1           │
            └──────────────────────────────┘
                               │
                               ▼
                        ┌─────────────┐
                        │    END      │
                        └─────────────┘
```

S100 — PRESSURE/POSITION CONTROL SELECT SIGNAL IS " PRESSURE CONTROL" ? — NO

S101 — SERVO CONTROL UNIT IS EXECUTING PRESSURE CONTROL ? — NO

S102 — CALCULATE POSITION DEVIATION AMOUNT (ERROR_v) MATCHING ACTUAL SPEED OF THE AXIS ERROR_v = V/L

S103 — CALCULATE PULSE (PULSE) TO BE OUTPUT TO SERVO CONTROL UNIT PULSE=ERROR_v-ERROR

S104 — INSTRUCT PULSE TO SERVO CONTROL UNIT

S105 — flag = 1

# FIG. 5

```
                    ┌─────────────────┐
                    │      START      │
                    └────────┬────────┘
                             │
                         ╱───┴───╲
                       ╱           ╲
          ╱──────────╱  SERVO CONTROL UNIT  ╲──────────╲
S200     ╲           SWITCHED PRESSURE CONTROL          ╲      NO
          ╲──────────╲  TO POSITION CONTROL ? ╱──────────╱──────┐
                       ╲           ╱                            │
                         ╲───┬───╱                              │
                             │ YES                              │
                         ╱───┴───╲                              │
          ╱────────────╱           ╲────────────────────────────┼──────►
S201      ╲              flag = 1 ?                   ╱          │  NO
          ╲────────────╲           ╱─────────────────            │
                         ╲───┬───╱                              │
                             │ YES                              │
        ┌────────────────────┴────────────────────┐            │
        │  CALCULATE NUMBER OF PULSES REQUIRED TO  │            │
S202    │  DECELERATE ACTUAL SPEED OF THE AXIS, AND│            │
        │  TRANSFER IT TO ACCELERATION/DECELERATION│            │
        │  PROCESSING UNIT OF NUMERICAL CONTROLLER │            │
        └────────────────────┬────────────────────┘            │
                             │                                  │
        ┌────────────────────┴────────────────────┐            │
S203    │                 flag = 0                 │            │
        └────────────────────┬────────────────────┘            │
                             │◄─────────────────────────────────┘
                             │
                    ┌────────┴────────┐
                    │       END       │
                    └─────────────────┘
```

# FIG. 6

SPEED

SPEED INSTRUCTION VALUE OF
SERVO CONTROL UNIT

TIME

PRESSURE
CONTROL

POSITION
CONTROL

FIG. 7

SPEED
INSTRUCTION

SPEED INSTRUCTION
DERIVED FROM
POSITION CONTROL

SPEED INSTRUCTION
DERIVED FROM
PRESSURE CONTROL

SELECTED SPEED
INSTRUCTION

CONTINUOUS
SPEED CHANGE

TIME

SPECIFIED CONTROL

PRESSURE CONTROL

POSITION CONTROL

SWITCHING OF CONTROL
BY SIGNAL

15

# FIG. 8

PULSES TO BE OUTPUT BY
ACCELERATION/DECELERATION
PROCESSING UNIT

SPEED INSTRUCTION VALUE
OF SERVO CONTROL UNIT

SPEED

TIME

PRESSURE
CONTROL

POSITION
CONTROL

# FIG. 9

SPEED
INSTRUCTION

SPEED INSTRUCTION DERIVED
FROM POSITION CONTROL

SPEED INSTRUCTION DERIVED
FROM PRESSURE CONTROL

SMOOTH SPEED CHANGE

SELECTED SPEED
INSTRUCTION

TIME

SPECIFIED CONTROL
PRESSURE CONTROL
POSITION CONTROL

SWITCHING OF CONTROL
BY SIGNAL

17

# FIG. 10

POSITION

OPERATION OF
TOP DIE

OPERATION OF
DIE CUSHION

TIME

PRESSURE
CONTROL

(1)    (2)    (3)    (4)    (5)

POSITION
CONTROL

SPEED

SPEED OF DIE CUSHION

TIME

# FIG. 11

```
O0001;
N1 G100 X0 Q100;
N2 G101 X0;
N3 G04 P1000;
N4 G90 G01 X100. F1000;
N5 M30;
```

# FIG. 12

SPEED INSTRUCTION

SPEED INSTRUCTION DERIVED FROM POSITION CONTROL

SPEED INSTRUCTION DERIVED FROM PRESSURE CONTROL

SELECTED SPEED INSTRUCTION

DISCONTINUOUS SPEED CHANGE

TIME

SPECIFIED CONTROL
PRESSURE CONTROL
POSITION CONTROL

SWITCHING OF CONTROL BY SIGNAL

# FIG. 13

POSITION

OPERATION OF TOP DIE

OPERATION OF
DIE CUSHION

P

PRESSURE CONTROL

POSITION CONTROL

(1)    (2)    (3)    (4)    (5)

SPEED

SPEED OF DIE CUSHION

TIME

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10202327 A
- JP 2006122944 A